# EUROPEAN PATENT APPLICATION

(11) **EP 4 831 807 A1**
(43) Date of publication of application: **28.10.2026**
(21) Application number: 24915216.6
(22) Date of filing: 28.12.2024
(51) Int. Cl.: G06F 9/50

(54) **TASK PROCESSING DEVICE, RELATED DIE, AND PROCESSING METHOD**

(30) Priority: 03.01.2024 CN 202410009457
(71) Applicant: Huawei Technologies Co., Ltd., Shenzhen, Guangdong 518129 (CN)
(72) Inventor: GENG, Yuling, Shenzhen, Guangdong 518129 (CN); ZHENG, Qiaoshi, Shenzhen, Guangdong 518129 (CN); ZOU, Wanbing, Shenzhen, Guangdong 518129 (CN); ZHOU, Xian, Shenzhen, Guangdong 518129 (CN); DUAN, Lei, Shenzhen, Guangdong 518129 (CN)
(74) Representative: Huawei European IPR
(86) International application number: PCT/CN2024/143539
(87) International publication number: WO 2025/146002

(57) **Abstract**

This application relates to the field of die technologies, and in particular, to a task processing apparatus, a related die, and a processing method. The apparatus includes a first die and a second die. The first die includes a scheduler and M first accelerators, and the second die includes an adapter and N second accelerators. The scheduler is configured to: obtain a first task set from upper-layer software, where the first task set includes a first task and a second task; and schedule one or more target first accelerators from the M first accelerators to process the first task. The adapter is configured to: obtain a second task set from the scheduler, where the second task set includes the second task; and schedule one or more target second accelerators from the N second accelerators to process the second task. According to embodiments of this application, overall performance of a chiplet product can be improved.

## Description

This application claims priority to Chinese Patent Application No. 202410009457.2, filed with the China National Intellectual Property Administration on January 3, 2024 and entitled "TASK PROCESSING APPARATUS, RELATED DIE, AND PROCESSING METHOD", which is incorporated herein by reference in its entirety.

### TECHNICAL FIELD

This application relates to the field of chip technologies, and in particular, to a task processing apparatus, a related die, and a processing method.

### BACKGROUND

After the development of system-on-chip (system-on-chip, SoC) integration into the post-Moore era, SoC chips have become increasingly larger and more advanced in manufacturing processes, leading to problems such as decreased yield rates, increased design costs, and longer development cycles. Therefore, the chiplet (chiplet, or small chip set) technology is proposed in the industry, and is expected to become an important way to continuously improve integration and chip computational power. A design concept of the SoC is to integrate a plurality of functional modules into one chip, to make a large chip, for example, a CPU (central processing unit, central processing unit), a memory, and an interface. Different from the SoC, the chiplet is designed to split a large chip with rich functions and a large area into a plurality of dies (dies) with specific functions, and then combine and package the dies with the specific functions based on function requirements to obtain a chiplet (chiplet) that can meet the requirements. Based on this design concept, the chiplet technology is expected to improve flexibility of chip design, improve the yield rate, and solve limitations caused by physical limits of the nanotechnology.

Currently, various accelerator resources in a chiplet product are distributed on different dies, and a scheduler needs to schedule accelerators with different functions on different dies to process a task. Because the dies in the chiplet product may be manufactured and evolved by different vendors based on different processes and specifications, there may be a case in which dies of a plurality of different versions in one chiplet product interface with each other. In this case, the scheduler needs to interface with accelerators of different versions. As a result, the scheduler may fail to normally schedule the accelerators, and overall performance of the chiplet is reduced. Therefore, how to provide a chiplet structure in which an accelerator resource can be normally scheduled and performance can be ensured is an urgent problem to be resolved.

### SUMMARY

Embodiments of this application provide a task processing apparatus, a related die, and a processing method, to decouple a scheduler from an accelerator deployed on another die, so as to ensure that the scheduler can normally schedule a cross-die accelerator resource, thereby improving overall performance of the task processing apparatus.

The following describes this application from different aspects. It should be understood that mutual reference may be made to the following implementations and beneficial effect of different aspects.

According to a first aspect, this application provides a task processing apparatus, where the apparatus includes a first die and a second die, the first die includes a scheduler and M first accelerators, and the second die includes an adapter and N second accelerators. The scheduler is configured to: obtain a first task set from upper-layer software, where the first task set includes a first task and a second task; and schedule one or more target first accelerators from the M first accelerators to process the first task. The adapter is configured to: obtain a second task set from the scheduler, where the second task set includes the second task; and schedule one or more target second accelerators from the N second accelerators to process the second task.

Different from a chiplet product that includes a scheduler and an accelerator in an existing technology, the scheduler directly schedules various accelerators on different dies in the product, and there may be a problem that the scheduler cannot normally schedule an accelerator when interfacing with accelerators of different versions. In this embodiment of this application, an adapter is added to shield fixed interfaces between the scheduler of the chiplet and various accelerators on other dies, so that the scheduler is decoupled from the accelerators on the other dies. When accelerators need to be scheduled, for accelerators that may not be normally scheduled by the scheduler, that is, accelerators that do not adapt to the scheduler, the scheduler may allocate tasks that need to be processed by these accelerators to the adapter, and then the adapter schedules these accelerators to process corresponding tasks, that is, the scheduler may not directly schedule these accelerators that may not be normally scheduled. For other accelerators that can be normally scheduled by the scheduler, that is, accelerators that adapt to the scheduler, after obtaining tasks that need to be processed by these accelerators, the scheduler may still directly schedule these accelerators to process corresponding tasks, so that various accelerator resources of the chiplet product can be scheduled as much as possible to process the tasks. This improves overall performance of the chiplet, and supports independent evolution of accelerator resources on various dies in the chiplet.

In a possible implementation, the scheduler communicates with the M first accelerators according to a first protocol, the adapter communicates with the N second accelerators according to a second protocol, and the scheduler communicates with the adapter according to a third protocol.

In this embodiment of this application, according to separate sets of interaction protocols, the scheduler may communicate with the first accelerator, the adapter may communicate with the second accelerator, and the scheduler may communicate with the adapter, so that the scheduler can normally schedule the first accelerator, and the adapter can normally communicate with the scheduler and normally schedule the second accelerator to process a task delivered by the scheduler.

In a possible implementation, the first protocol is different from the second protocol, the first protocol includes an advanced extensible interface AXI protocol, and the second protocol includes an advanced high-performance bus AHB protocol.

In a possible implementation, the scheduler includes a first interface, a second interface, and a third interface, and the adapter includes a fourth interface and a fifth interface. The scheduler is connected to the M first accelerators through the first interface, and the first interface complies with the first protocol. The scheduler is connected to the fourth interface of the adapter through the second interface, and the second interface and the fourth interface comply with the third protocol. The scheduler obtains the first task set from the upper-layer software through the third interface. The adapter is connected to the N second accelerators through the fifth interface, and the fifth interface complies with the second protocol.

In this embodiment of this application, various interfaces used by the scheduler and the adapter should be interfaces that comply with corresponding protocols, to avoid performance deterioration of the task processing apparatus caused by incompatibility between an interface and a protocol.

In a possible implementation, the scheduler is further configured to:
obtain first configuration information, where the first configuration information indicates a first configuration relationship between the first task and the one or more target first accelerators, and the first configuration relationship includes one or more of a correspondence between a task type of the first task and a type of the target first accelerator, a quantity of target first accelerators corresponding to the first task, or a security level of the target first accelerator corresponding to the first task; and
determine the one or more target first accelerators based on first task information of the first task and the first configuration information, where the first task information includes one or more of the task type or a task identifier of the first task.

In this embodiment of this application, the scheduler may determine, based on task information and configuration information of a to-be-processed task, a type of an accelerator to be scheduled, a quantity of accelerators, a security level of the accelerator, and the like, so that the task can be processed accurately, timely, and securely.

In a possible implementation, the adapter is further configured to:
obtain second configuration information, where the second configuration information indicates a second configuration relationship between the second task and the one or more target second accelerators, and the second configuration relationship includes one or more of a correspondence between a task type of the second task and a type of the target second accelerator, a quantity of target second accelerators corresponding to the second task, or a security level of the target second accelerator corresponding to the second task; and
determine the one or more target second accelerators based on second task information of the second task and the second configuration information, where the second task information includes one or more of the task type or a task identifier of the second task.

In this embodiment of this application, the adapter may determine, based on task information and configuration information of a to-be-processed task, a type of an accelerator to be scheduled, a quantity of accelerators, a security level of the accelerator, and the like, so that the task can be processed accurately, timely, and securely.

In a possible implementation, the scheduler is further configured to:
obtain first execution information, where the first execution information indicates an execution status of the first task; and
when the execution status of the first task includes an error occurring during task execution, send a first reset command, where the first reset command indicates to reset an accelerator that fails to execute the first task; or
when the execution status of the first task includes task execution completion, send a first release command, where the first release command indicates to release an accelerator that completes execution of the first task.

In this embodiment of this application, after scheduling the accelerator to process the task, the scheduler may obtain a task processing status of the accelerator, for example, whether an error occurs during task processing or whether task processing is completed, to perform a corresponding operation, so that a subsequent task can be performed smoothly.

In a possible implementation, the adapter is further configured to:
obtain second execution information, where the second execution information indicates an execution status of the second task; and
when the execution status of the second task includes an error occurring during task execution, send a second reset command, where the second reset command indicates to reset an accelerator that fails to execute the second task; or
when the execution status of the second task includes task execution completion, send a second release command, where the second release command indicates to release an accelerator that completes execution of the second task.

In this embodiment of this application, after scheduling the accelerator to process the task, the adapter may obtain a task processing status of the accelerator, for example, whether an error occurs during task processing or whether task processing is completed, to perform a corresponding operation, so that a subsequent task can be performed smoothly.

In a possible implementation, the M first accelerators are primary accelerators, and the N second accelerators are secondary accelerators.

In this embodiment of this application, the primary accelerators and the scheduler may be deployed on a same die, and the scheduler directly schedules the primary accelerators, so that when the task processing apparatus completes a task in a main scenario, scheduling paths of the scheduler for the primary accelerators are reduced, and the primary accelerators can respond to the task more quickly. This further improves overall performance of the task processing apparatus.

In a possible implementation, the scheduler includes one or more virtual schedulers, one of the one or more virtual schedulers corresponds to one or more of the M first accelerators, and the scheduler is specifically configured to:
determine one or more target virtual schedulers from the one or more virtual schedulers, where the one or more target virtual schedulers correspond to the one or more target first accelerators, and the one or more target virtual schedulers are in an idle state; and
schedule, by using the one or more target virtual schedulers, the one or more target first accelerators to process the first task.

In this embodiment of this application, one or more virtual schedulers may be abstracted from the scheduler, and the accelerator is scheduled by using a virtual scheduling resource. This facilitates scheduling and management of the to-be-processed task and the accelerator by the scheduler, and improves scheduling flexibility.

In a possible implementation, the scheduler is further configured to:
obtain third configuration information from the upper-layer software, where the third configuration information indicates to adjust a quantity of virtual schedulers in the scheduler, and/or indicates to adjust a quantity of first accelerators corresponding to a target virtual scheduler in the scheduler; and
based on the third configuration information, adjust the quantity of virtual schedulers, and/or adjust the quantity of first accelerators corresponding to the target virtual scheduler, where the target virtual scheduler is any one of the one or more virtual schedulers.

In this embodiment of this application, the quantity of virtual schedulers in the scheduler and the quantity of accelerators corresponding to the virtual scheduler can also be adjusted through configuration, so that requirements in more scenarios can be met.

In a possible implementation, the adapter includes one or more virtual adapters, one of the one or more virtual adapters corresponds to one or more of the N second accelerators, and the adapter is specifically configured to:
determine one or more target virtual adapters from the one or more virtual adapters, where the one or more target virtual adapters correspond to the one or more target second accelerators, and the one or more target virtual adapters are in an idle state; and
schedule, by using the one or more target virtual adapters, the one or more target second accelerators to process the second task.

In this embodiment of this application, one or more virtual adapters may be abstracted from the adapter, and the accelerator is scheduled by using a virtual scheduling resource. This facilitates scheduling and management of the to-be-processed task and the accelerator by the adapter, and improves scheduling flexibility.

In a possible implementation, the scheduler is further configured to:
obtain fourth configuration information from the upper-layer software, and send the fourth configuration information to the adapter, where the fourth configuration information indicates to adjust a quantity of virtual adapters in the adapter, and/or indicates to adjust a quantity of second accelerators corresponding to a target virtual adapter in the adapter; and
the adapter is further configured to:
   receive the fourth configuration information, and based on the fourth configuration information, adjust the quantity of virtual adapters, and/or adjust the quantity of second accelerators corresponding to the target virtual adapter, where the target virtual adapter is any one of the one or more virtual adapters.

In this embodiment of this application, the quantity of virtual adapters in the adapter and the quantity of accelerators corresponding to the virtual adapter can also be adjusted through configuration, so that requirements in more scenarios can be met.

In a possible implementation, the first die and the second die are isomorphic or heteromorphic, and/or the first die and the second die are homogeneous or heterogeneous.

According to a second aspect, this application provides a first die, where the first die includes a scheduler and M first accelerators, and
the scheduler is configured to:
obtain a first task set from upper-layer software, where the first task set includes a first task and a second task;
schedule one or more target first accelerators from the M first accelerators to process the first task; and
deliver a second task set to an adapter of a second die, where the second task set includes the second task.

In this embodiment of this application, an adapter is added to shield fixed interfaces between the scheduler of the chiplet and various accelerators on other dies, so that the scheduler is decoupled from the accelerators on the other dies. When accelerators need to be scheduled for processing tasks, for accelerators that may not be normally scheduled by the scheduler, that is, accelerators that do not adapt to the scheduler, the scheduler may allocate tasks that need to be processed by these accelerators to the adapter, and then the adapter schedules these accelerators to process corresponding tasks, that is, the scheduler may not directly schedule these accelerators that may not be normally scheduled. For other accelerators that can be normally scheduled by the scheduler, that is, accelerators that adapt to the scheduler, after obtaining tasks that need to be processed by these accelerators, the scheduler may still directly schedule these accelerators to process corresponding tasks, so that accelerator resources of the chiplet product can be scheduled as much as possible to process the tasks. This ensures overall performance of the chiplet, and supports independent evolution of accelerator resources on various dies in the chiplet.

In a possible implementation, the scheduler communicates with the M first accelerators according to a first protocol.

In a possible implementation, the scheduler includes a first interface, a second interface, and a third interface. The scheduler is connected to the M first accelerators through the first interface, and the first interface complies with the first protocol. The scheduler is connected to a fourth interface of the adapter through the second interface, and the second interface and the fourth interface comply with a third protocol. The scheduler obtains the first task set from the upper-layer software through the third interface.

In a possible implementation, the scheduler is further configured to:
obtain first configuration information, where the first configuration information indicates a first configuration relationship between the first task and the one or more target first accelerators, and the first configuration relationship includes one or more of a correspondence between a task type of the first task and a type of the target first accelerator, a quantity of target first accelerators corresponding to the first task, or a security level of the target first accelerator corresponding to the first task; and
determine the one or more target first accelerators based on first task information of the first task and the first configuration information, where the first task information includes one or more of the task type or a task identifier of the first task.

In a possible implementation, the scheduler is further configured to:
obtain first execution information, where the first execution information indicates an execution status of the first task; and
when the execution status of the first task includes an error occurring during task execution, send a first reset command, where the first reset command indicates to reset an accelerator that fails to execute the first task; or
when the execution status of the first task includes task execution completion, send a first release command, where the first release command indicates to release an accelerator that completes execution of the first task.

In a possible implementation, the M first accelerators are primary accelerators.

In a possible implementation, the scheduler includes one or more virtual schedulers, one of the one or more virtual schedulers corresponds to one or more of the M first accelerators, and the scheduler is specifically configured to:
determine one or more target virtual schedulers from the one or more virtual schedulers, where the one or more target virtual schedulers correspond to the one or more target first accelerators, and the one or more target virtual schedulers are in an idle state; and
schedule, by using the one or more target virtual schedulers, the one or more target first accelerators to process the first task.

In a possible implementation, the scheduler is further configured to:
obtain third configuration information from the upper-layer software, where the third configuration information indicates to adjust a quantity of virtual schedulers in the scheduler, and/or indicates to adjust a quantity of first accelerators corresponding to a target virtual scheduler in the scheduler; and
based on the third configuration information, adjust the quantity of virtual schedulers, and/or adjust the quantity of first accelerators corresponding to the target virtual scheduler, where the target virtual scheduler is any one of the one or more virtual schedulers.

According to a third aspect, this application provides a second die, where the second die includes an adapter and N second accelerators, and the adapter is configured to:
obtain a second task set from a scheduler of a first die, where the second task set includes a second task; and
schedule one or more target second accelerators from the N second accelerators to process the second task.

In this embodiment of this application, an adapter is added to shield fixed interfaces between the scheduler of the chiplet and various accelerators on other dies, so that the scheduler is decoupled from the accelerators on the other dies. When accelerators need to be scheduled, for accelerators that may not be normally scheduled by the scheduler, that is, accelerators that do not adapt to the scheduler, the scheduler may allocate tasks that need to be processed by these accelerators to the adapter, and then the adapter schedules these accelerators to process corresponding tasks, that is, the scheduler may not directly schedule these accelerators that may not be normally scheduled. For other accelerators that can be normally scheduled by the scheduler, that is, accelerators that adapt to the scheduler, after obtaining tasks that need to be processed by these accelerators, the scheduler may still directly schedule these accelerators to process corresponding tasks, so that accelerator resources of the chiplet product can be scheduled as much as possible to process the tasks. This ensures overall performance of the chiplet, and supports independent evolution of accelerator resources on various dies in the chiplet.

In a possible implementation, the adapter communicates with the N second accelerators according to a second protocol.

In a possible implementation, the adapter includes a fourth interface and a fifth interface, the adapter is connected to the N second accelerators through the fifth interface, the fifth interface complies with the second protocol, the adapter is connected to a second interface of the scheduler through the fourth interface, and the second interface and the fourth interface comply with a third protocol.

In a possible implementation, the adapter is further configured to:
obtain second configuration information, where the second configuration information indicates a second configuration relationship between the second task and the one or more target second accelerators, and the second configuration relationship includes one or more of a correspondence between a task type of the second task and a type of the target second accelerator, a quantity of target second accelerators corresponding to the second task, or a security level of the target second accelerator corresponding to the second task; and
determine the one or more target second accelerators based on second task information of the second task and the second configuration information, where the second task information includes one or more of the task type or a task identifier of the second task.

In a possible implementation, the adapter is further configured to:
obtain second execution information, where the second execution information indicates an execution status of the second task; and
when the execution status of the second task includes an error occurring during task execution, send a second reset command, where the second reset command indicates to reset an accelerator that fails to execute the second task; or
when the execution status of the second task includes task execution completion, send a second release command, where the second release command indicates to release an accelerator that completes execution of the second task.

In a possible implementation, the N second accelerators are secondary accelerators.

In a possible implementation, the adapter includes one or more virtual adapters, one of the one or more virtual adapters corresponds to one or more of the N second accelerators, and the adapter is specifically configured to:
determine one or more target virtual adapters from the one or more virtual adapters, where the one or more target virtual adapters correspond to the one or more target second accelerators, and the one or more target virtual adapters are in an idle state; and
schedule, by using the one or more target virtual adapters, the one or more target second accelerators to process the second task.

In a possible implementation, the adapter is further configured to:
obtain fourth configuration information, where the fourth configuration information indicates to adjust a quantity of virtual adapters in the adapter, and/or indicates to adjust a quantity of second accelerators corresponding to a target virtual adapter in the adapter; and
based on the fourth configuration information, adjust the quantity of virtual adapters, and/or adjust the quantity of second accelerators corresponding to the target virtual adapter, where the target virtual adapter is any one of the one or more virtual adapters.

According to a fourth aspect, this application provides a processing method, applied to a scheduler of a first die, where the first die further includes M first accelerators, and the method includes:
obtaining a first task set from upper-layer software, where the first task set includes a first task and a second task;
scheduling one or more target first accelerators from the M first accelerators to process the first task; and
delivering a second task set to an adapter of a second die, where the second task set includes the second task.

In a possible implementation, the method further includes:
obtaining first configuration information, where the first configuration information indicates a configuration relationship between the first task and the one or more target first accelerators, and the first configuration relationship includes one or more of a correspondence between a task type of the first task and a type of the target first accelerator, a quantity of target first accelerators corresponding to the first task, or a security level of the target first accelerator corresponding to the first task; and
determining the one or more target first accelerators based on first task information of the first task and the first configuration information, where the first task information includes one or more of the task type or a task identifier of the first task.

In a possible implementation, the method further includes:
obtaining first execution information, where the first execution information indicates an execution status of the first task; and
when the execution status of the first task includes an error occurring during task execution, sending a first reset command, where the first reset command indicates to reset an accelerator that fails to execute the first task; or
when the execution status of the first task includes task execution completion, sending a first release command, where the first release command indicates to release an accelerator that completes execution of the first task.

In a possible implementation, the scheduler includes one or more virtual schedulers, one of the one or more virtual schedulers corresponds to one or more of the M first accelerators, and the method further includes:
determining one or more target virtual schedulers from the one or more virtual schedulers, where the one or more target virtual schedulers correspond to the one or more target first accelerators, and the one or more target virtual schedulers are in an idle state; and
scheduling, by using the one or more target virtual schedulers, the one or more target first accelerators to process the first task.

In a possible implementation, the method further includes:
obtaining third configuration information from the upper-layer software, where the third configuration information indicates to adjust a quantity of virtual schedulers in the scheduler, and/or indicates to adjust a quantity of first accelerators corresponding to a target virtual scheduler in the scheduler; and
based on the third configuration information, adjusting the quantity of virtual schedulers, and/or adjusting the quantity of first accelerators corresponding to the target virtual scheduler, where the target virtual scheduler is any one of the one or more virtual schedulers.

According to a fifth aspect, this application provides a processing method, applied to an adapter of a second die, where the second die further includes N second accelerators, and the method includes:
obtaining a second task set from a scheduler of a first die, where the second task set includes a second task;
   and
scheduling one or more target second accelerators from the N second accelerators to process the second task.

In a possible implementation, the method further includes:
obtaining second configuration information, where the second configuration information indicates a configuration relationship between the second task and the one or more target second accelerators, and the second configuration relationship includes one or more of a correspondence between a task type of the second task and a type of the target second accelerator, a quantity of target second accelerators corresponding to the second task, or a security level of the target second accelerator corresponding to the second task; and
determining the one or more target second accelerators based on second task information of the second task and the second configuration information, where the second task information includes one or more of the task type or a task identifier of the second task.

In a possible implementation, the method further includes:
obtaining second execution information, where the second execution information indicates an execution status of the second task; and
when the execution status of the second task includes an error occurring during task execution, sending a second reset command, where the second reset command indicates to reset an accelerator that fails to execute the second task; or
when the execution status of the second task includes task execution completion, sending a second release command, where the second release command indicates to release an accelerator that completes execution of the second task.

In a possible implementation, the adapter includes one or more virtual adapters, one of the one or more virtual adapters corresponds to one or more of the N second accelerators, and the method further includes:
determining one or more target virtual adapters from the one or more virtual adapters, where the one or more target virtual adapters correspond to the one or more target second accelerators, and the one or more target virtual adapters are in an idle state; and
scheduling, by using the one or more target virtual adapters, the one or more target second accelerators to process the second task.

In a possible implementation, the method further includes:
obtaining fourth configuration information, where the fourth configuration information indicates to adjust a quantity of virtual adapters in the adapter, and/or indicates to adjust a quantity of second accelerators corresponding to a target virtual adapter in the adapter; and
based on the fourth configuration information, adjusting the quantity of virtual adapters, and/or adjusting the quantity of second accelerators corresponding to the target virtual adapter, where the target virtual adapter is any one of the one or more virtual adapters.

According to a sixth aspect, this application provides a task processing apparatus, where the apparatus includes a scheduler and an adapter, the scheduler is coupled to a first die, the adapter is coupled to a second die, the first die includes M first accelerators, and the second die includes N second accelerators.

The scheduler is configured to:
obtain a first task set from upper-layer software, where the first task set includes a first task and a second task; and
schedule one or more target first accelerators from the M first accelerators to process the first task.

The adapter is configured to:
obtain a second task set from the scheduler, where the second task set includes the second task; and
schedule one or more target second accelerators from the N second accelerators to process the second task.

According to a seventh aspect, this application provides a semiconductor chip, where the semiconductor chip includes the task processing apparatus or the die according to the first aspect, the second aspect, the third aspect, the sixth aspect, or any one of the possible implementations of the first aspect, the second aspect, the third aspect, or the sixth aspect.

According to an eighth aspect, this application provides a computer-readable storage medium. The computer-readable storage medium stores program instructions, and when the program instructions are run, the method according to any one of the fourth aspect, the fifth aspect, or any one of the possible implementations of the fourth aspect or the fifth aspect is performed.

According to a ninth aspect, this application provides a program product including program instructions. When the program product runs, the method according to the fourth aspect, the fifth aspect, or any one of the possible implementations of the fourth aspect or the fifth aspect is performed.

According to a tenth aspect, this application provides an electronic device. The electronic device includes the task processing apparatus or the die according to the first aspect, the second aspect, the third aspect, the sixth aspect, or any one of the possible implementations of the first aspect, the second aspect, the third aspect, or the sixth aspect. The electronic device further includes a memory, and the memory is configured to store program instructions and data that are necessary for running of the task processing apparatus or the die; and the electronic device may further include a communication interface, configured to communicate with another device or a communication network.

According to an eleventh aspect, this application provides an electronic device. The electronic device has a function of implementing the processing method according to the fourth aspect, the fifth aspect, or any one of the foregoing aspects. The function may be implemented by hardware, or may be implemented by hardware executing corresponding software. The hardware or the software includes one or more modules corresponding to the function.

According to a twelfth aspect, this application provides a chip system. The chip system includes the task processing apparatus or the die according to the first aspect, the second aspect, the third aspect, the sixth aspect, or any one of the possible implementations of the first aspect, the second aspect, the third aspect, or the sixth aspect. In a possible design, the chip system further includes a memory, and the memory is configured to store program instructions and data that are necessary or related to the task processing apparatus or the die. The chip system may include a chip, or may include a chip and another discrete component.

For technical effect achieved in the foregoing aspects, mutual reference may be made to the foregoing aspects, or reference may be made to beneficial effect in the following method embodiments. Details are not described herein.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a structure of a chiplet;
FIG. 2 is a diagram of a structure of a task processing apparatus according to an embodiment of this application;
FIG. 3 is a diagram of a structure of another task processing apparatus according to an embodiment of this application;
FIG. 4 is a diagram of a structure of still another task processing apparatus according to an embodiment of this application;
FIG. 5 is a schematic flowchart of a processing method according to an embodiment of this application;
FIG. 6 is a diagram of a task processing procedure according to an embodiment of this application;
FIG. 7 is a diagram of another task processing procedure according to an embodiment of this application; and
FIG. 8 is a diagram of information exchange between task processing apparatuses according to an embodiment of this application.

### DESCRIPTION OF EMBODIMENTS

The following clearly and completely describes the technical solutions in embodiments of this application with reference to the accompanying drawings in embodiments of this application.

In descriptions of this application, terms such as "first" and "second" are merely used to distinguish between different objects, and do not limit quantities and execution sequences. In addition, the terms such as "first" and "second" do not indicate a definite difference. For example, a first message, a second message, and the like are merely used to distinguish between different information, and do not limit a sequence of the first message, the second message, and the like. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one (item)", "one or more of the following items (pieces)", or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c each may be singular or plural.

In embodiments of this application, the word like "example", "such as", or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

It may be understood that, in descriptions of this application, both "when" and "if" mean that an apparatus performs corresponding processing in an objective situation, are not intended to limit time, do not require the apparatus to necessarily have a determining action during implementation, and do not mean another limitation.

"Simultaneously" in this application may be understood as being at a same time point, may be understood as being in a time period, or may be understood as being in a same period, and may be specifically understood with reference to context.

In this application, unless otherwise specified, an element indicated in a singular form is intended to indicate "one or more", but does not indicate "one and only one".

It may be understood that, in embodiments of this application, "A corresponds to B" indicates that B is associated with A, and B may be determined based on A. However, it should be further understood that determining B based on A does not mean that B is determined based only on A. B may alternatively be determined based on A and/or other information.

It may be understood that in embodiments of this application, "indicate" and "indication" may include a direct indication and an indirect indication, or may include an explicit indication and an implicit indication. The description "specific indication information indicates A" or "indication information of A" may include that the indication information directly indicates A or indirectly indicates A, but does not mean that the indication information necessarily carries A. Information indicated by information is referred to as to-be-indicated information. In a specific implementation process, the to-be-indicated information may be indicated in a plurality of manners. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated according to an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information. Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application.

To better understand the technical solutions in embodiments of this application, the following briefly describes several terms or nouns related to this application, to facilitate understanding by a person skilled in the art.

### 1. Chiplet (chiplet)

A chiplet, also referred to as a small chip set, may be a package of a plurality of dies (dies) that meet a specific function together with a bottom-layer base chip by using a die-to-die internal interconnection technology, where the plurality of dies may be manufactured by different manufacturers and by using different manufacturing processes. In comparison with an SoC, the chiplet can achieve a higher yield rate and lower costs. During design, the chiplet may be decomposed based on different compute nits or functional units, and then a most suitable process technology may be selected for manufacturing each die (die). The dies with different functions and different manufacturing processes are interconnected and packaged into a chiplet by using an advanced packaging technology, to implement a new form of IP reuse. This application provides a chiplet structure including a scheduler and an adapter. The adapter is added to shield fixed interfaces between the scheduler and various accelerators deployed on other dies, and the scheduler is decoupled from the accelerators on the other dies. The scheduler may schedule, by using the adapter, accelerators that cannot be normally scheduled by the scheduler. The scheduler can directly schedule other accelerators that can be normally scheduled by the scheduler, so that accelerator resources on the chiplet product can be scheduled as much as possible to process tasks, thereby ensuring overall performance of the chiplet.

### 2. Die (die)

A die is a small unpackaged integrated circuit body made of a semiconductor material. A given function of the integrated circuit is implemented on the small semiconductor. Generally, a large quantity of integrated circuits are manufactured on a large semiconductor wafer (wafer) by performing a plurality of steps such as photolithography, and then divided into square small pieces, which are referred to as dies. In this case, each die is a copy of an integrated circuit. The semiconductor material used in the wafer is usually electronic-grade silicon (EGS) or a single crystal of another semiconductor (such as gallium arsenide, GaAs). Generally, integrated circuit dies are packaged in ceramic or plastic packages with exposed leads. Due to a miniaturization requirement of a circuit, some integrated circuit dies may not be packaged and are directly provided for a downstream user for use. In this case, the dies may also be referred to as bare chips. In this application, the task processing apparatus may be a chiplet product, and a first die and a second die in the task processing apparatus may be used as components of the chiplet. A scheduler and a first accelerator may be deployed on the first die, and an adapter and a second accelerator may be deployed on the second die. The scheduler may schedule the first accelerator to process a task, and schedule, by using the adapter, the second accelerator to process a task, to ensure overall performance of the chiplet.

### 3. Hardware accelerator (hardware accelerator, HAC)

A hardware accelerator, abbreviated as an accelerator, is a dedicated hardware device/apparatus, and is intended to accelerate an operation through hardware processing. Currently, a common hardware accelerator is a graphics processing unit (graphics processing unit, GPU), which is a hardware processor specially used for graphics computing and is configured to accelerate complex computing in graphics processing. In addition, for example, a CPU, a tensor processing unit (tensor processing unit, TPU), direct memory access (direct memory access, DMA), an input/output (input/output, I/O), an artificial intelligence (artificial intelligence, AI) accelerator, and some domain-specific accelerators (DSAs, also referred to as dedicated accelerators) are also hardware accelerators. For the chiplet technology, various resources on a chip are usually distributed on different dies (dies). For example, some accelerators (CPU, AI, and the like) are distributed on different dies. Therefore, a dedicated CPU die, I/O die, AI die, memory die, and the like may appear, and these dies may flexibly form a chip product based on different product specifications.

### 4. Intellectual property (intellectual property, IP) core

An IP core is a general term for an integrated circuit core with an intellectual property core, and is an integrated circuit design macro-module (logical or functional unit) that has been progressively separated during a chip design process and repeatedly verified, and has specific functions, and that can be reused and includes specific core elements (such as instruction sets, function descriptions, and code). IP cores are classified into soft cores (high flexibility), fixed cores (high reliability), and hard cores (high performance). Broadly categorized, the IP cores can be divided into processor and microcontroller IP, memory IP, peripheral and interface IP, analog and hybrid circuit IP, communication IP, image and media IP, and the like. The IP core is used to reduce costs of redundant design, reduce a risk of errors, and improve chip design efficiency during the chip design process. The first accelerator and the second accelerator in embodiments of this application may be any one of the foregoing IP cores, for example, the image and media IP (which may correspond to a GPU accelerator), the peripheral and interface IP (which may correspond to a DMA accelerator), or the processor and microcontroller IP (which may correspond to a CPU accelerator).

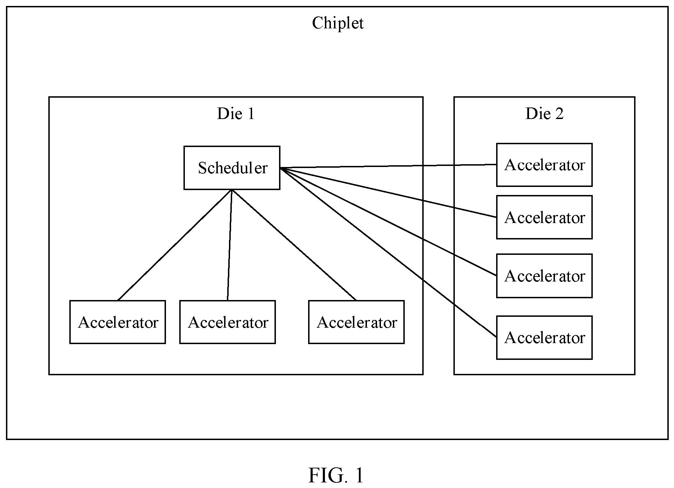

First, technical problems to be specifically resolved in this application are analyzed and proposed. FIG. 1 is a diagram of a structure of a chiplet. The chiplet includes a die 1 and a die 2. Various resources are distributed on different dies in the chiplet. For example, a scheduler and one or more accelerators are deployed on the die 1, and one or more accelerators are deployed on the die 2. The scheduler needs to schedule accelerators with different functions on the die 1 and the die 2 to process tasks. Because dies in the chiplet may be manufactured by different manufacturers based on different processes and specifications, the dies may be package together after independent evolution. In this case, there may be a case in which dies of a plurality of different versions in one chiplet interface with each other, and a case in which the scheduler cannot normally schedule the accelerator. For example, a version 1.0 of the die 1 corresponds (adapts) to a version 1.0 of the die 2, and the accelerator on the die 2 may be normally scheduled by the scheduler on the die 1. A company may need to combine and package the original die 1 (version 1.0) and another die 2 (version x.0, version evolved/outdated) based on requirements of the company. In this case, the version of the die 1 is fixed (the scheduler and the accelerator on the die 1 remain unchanged). A version, a function, and an interface interaction mechanism of the accelerator, an accelerator quantity, or the like may also change due to a version change of the die 2. In this case, the scheduler interfaces with the accelerator of the evolved version (or the outdated version) on the die 2. As a result, the scheduler on the die 1 may fail to normally schedule the accelerator on the die 2, and overall performance of the chiplet deteriorates.

Therefore, this application provides a task processing apparatus, a related die, and a processing method. An adapter is added to shield fixed interfaces between a scheduler of a chiplet and various accelerators on other dies, so that the scheduler is decoupled from the accelerators on the other dies. When accelerators need to be scheduled, for accelerators that may not be normally scheduled by the scheduler, that is, accelerators that do not adapt to the scheduler, the scheduler may allocate tasks that need to be processed by these accelerators to the adapter, and then the adapter schedules these accelerators to process corresponding tasks, that is, the scheduler may not directly schedule these accelerators that may not be normally scheduled. For other accelerators that can be normally scheduled by the scheduler, that is, accelerators that adapt to the scheduler, after obtaining tasks that need to be processed by these accelerators, the scheduler may still directly schedule these accelerators to process corresponding tasks, so that accelerator resources of the chiplet product can be scheduled as much as possible to process the tasks. This ensures overall performance of the chiplet, and supports independent evolution of resources on various dies in the chiplet.

For ease of understanding, with reference to more accompanying drawings, the following describes the technical solutions provided in this application.

In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

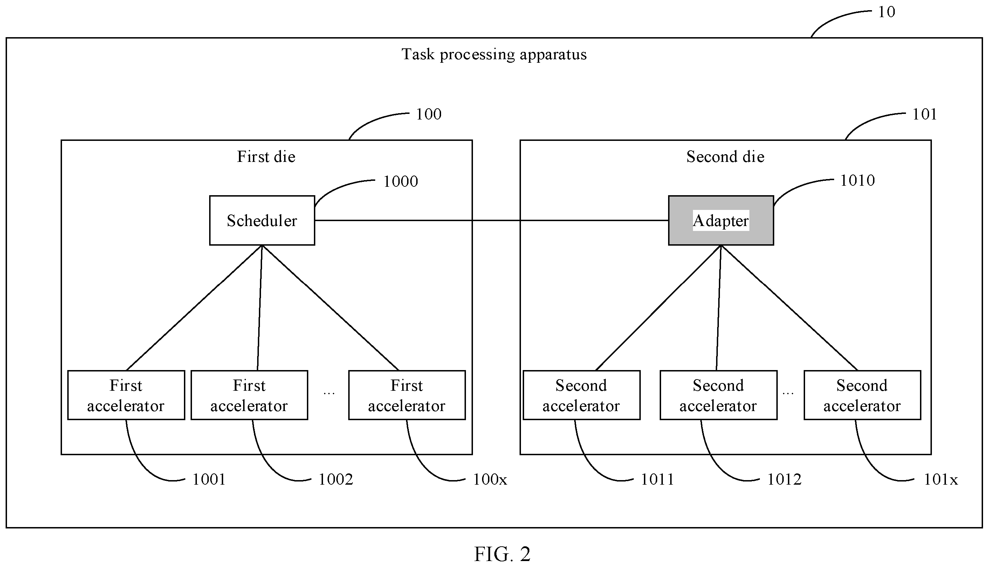

Refer to FIG. 2. FIG. 2 is a diagram of a structure of a task processing apparatus according to an embodiment of this application. The task processing apparatus [10] may be used as a chiplet product or a partial structure of a chiplet product. As shown in FIG. 2, the task processing apparatus [10] may include a first die [100] and a second die [101], and the first die [100] may include a scheduler [1000] and M first accelerators [1001 to 100x]. Optionally, the scheduler [1000] may communicate with the M first accelerators [1001 to 100x] according to a first protocol. The second die [101] may include an adapter [1010] and N second accelerators [1011 to 101x]. Optionally, the adapter [1010] may communicate with the N second accelerators [1011 to 101x] according to a second protocol. Optionally, the scheduler [1000] of the first die [100] may communicate with the adapter [1010] of the second die [101] according to a third protocol, and both M and N are integers greater than 0.

The scheduler [1000] may be configured to: obtain a first task set from upper-layer software, where the first task set may include a first task and a second task; and schedule a part or all of the M first accelerators [1001 to 100x] (namely, one or more target first accelerators) to process the first task.

The adapter [1010] may be configured to: obtain a second task set from a scheduler [1000], where the second task set includes the second task; and schedule a part or all of the N second accelerators [1011 to 101x] (namely, one or more target second accelerators) to process the second task.

It may be understood that the first task set obtained by the scheduler from the upper-layer software (software, SW) may include the first task and the second task. The first task is processed by the first accelerator of the first die, and the second task is processed by the second accelerator of the second die. Therefore, the scheduler needs to schedule the first accelerator to process the first task, and deliver the second task to the adapter. In an actual running process of the task processing apparatus, the first task set obtained by the scheduler from the upper-layer software may not include both the first task and the second task. For example, the first task set may include the first task but not the second task. In this case, all tasks obtained by the scheduler may be processed by the first accelerators on the first die, and the adapter and the second accelerators on the second die may not participate in processing the first task. Similarly, the first task set may alternatively include the second task but not the first task. In this case, all tasks obtained by the scheduler are processed by the second accelerators on the second die. The adapter may first obtain the second task from the scheduler, and then schedule the second accelerator to process the second task. The first accelerator of the first die may not participate in processing the second task. In addition, the first task and the second task may be two different tasks, and are separately processed by accelerators on different dies. Alternatively, the first task and the second task may be a same task (or subtasks of a same task), that is, a same task may be jointly completed by accelerators on different dies. This is not specifically limited herein.

In a possible implementation, the scheduler may include a first interface, a second interface, and a third interface, and the adapter may include a fourth interface and a fifth interface. The scheduler may be connected to the M first accelerators through the first interface. The first interface needs to comply with (meets) a first protocol. The first interface may also be referred to as an accelerator interface because the first interface is connected to an accelerator. The scheduler may be connected to the fourth interface of the adapter through the second interface. The second interface and the fourth interface need to comply with a third protocol for interaction between the scheduler and the adapter. The second interface and the fourth interface may be referred to as interconnection interfaces. When the scheduler and the adapter are deployed on different dies, the second interface and the fourth interface may also be referred to as inter-die interconnection interfaces. Interface types of the two interfaces may be the same or may be different. The scheduler may obtain the first task set from the upper-layer software through the third interface. The third interface may also be referred to as a software and hardware interface (or a task obtaining interface). The adapter is connected to the N second accelerators through the fifth interface, the fifth interface complies with a second protocol, and the fifth interface is also referred to as an accelerator interface. Both the first interface and the fifth interface are accelerator interfaces. The first interface and the fifth interface may be interfaces of a same type, or may be interfaces of different types. The first interface and the fifth interface may comply with a same protocol or different protocols.

Optionally, the first protocol and the second protocol may be a same protocol, for example, an advanced extensible interface (Advanced eXtensible Interface, AXI) protocol, an advanced high-performance bus (Advanced High-performance Bus, AHB) protocol, an advanced peripheral bus (Advanced Peripheral Bus, APB) protocol, a peripheral component interconnect (peripheral component interconnect, PCI) protocol, a peripheral component interconnect express (peripheral component interconnect express, PCIe) protocol, or a compute express link (compute express link, CXL) protocol. Alternatively, the first protocol and the second protocol may be different protocols. The different protocols may be two different protocols, for example, one is an AXI protocol, the other is an AHB protocol, or one is a PCIe protocol, and the other is a CXL protocol. The different protocols may also be different versions of a same type of protocol, for example, one is AXI 4.0, the other is AXI 4.0-Lite, or one is PCIe 1.0, and the other is PCIe 4.0. This is not specifically limited herein. In addition, the third protocol may be any one of the foregoing protocols, or may be another protocol that is not listed, or may be a predefined proprietary protocol. This is not specifically limited herein.

If the first protocol is different from the second protocol, it may be understood that interaction protocols supported by the first accelerator and the second accelerator are different. When the scheduler can normally schedule the first accelerator, there may be a case in which the second accelerator may not be normally scheduled because the second protocol supported by the second accelerator may be incompatible with the first protocol supported by the first accelerator. In addition, even if the interaction protocols supported by the first accelerator and the second accelerator are the same (that is, the first protocol is the same as the second protocol), there may be a case in which the scheduler cannot normally schedule the second accelerator. For example, when the first accelerator and the second accelerator need to obtain different types or quantities of pieces of information in order to be scheduled, and information sent by the scheduler when scheduling the second accelerator is still a same type or quantity of pieces of information as information sent when scheduling the first accelerator, the second accelerator may not be normally scheduled. For example, when the first protocol is different from the second protocol, and the scheduler cannot normally schedule the second accelerator, the scheduler may deliver, to the adapter, a task that needs to be processed by the second accelerator, and then the adapter schedules the second accelerator to process the task. Because the second accelerator supports the second protocol, the adapter may interact with the second accelerator according to the second protocol. Therefore, it can be ensured that the second accelerator can be normally scheduled, thereby ensuring overall performance of the task processing apparatus. For example, when the first protocol is the same as the second protocol, and the scheduler cannot normally schedule the second accelerator, the scheduler may deliver, to the adapter, the task that needs to be processed by the second accelerator. The adapter may parse a scheduling requirement of the scheduler, and deliver, to the second accelerator, various types of information required for scheduling, so as to schedule the second accelerator.

In a possible implementation, the first protocol is different from the second protocol. The first protocol may be the AXI protocol, and the second protocol may be the AHB protocol. Optionally, specific protocols of the first protocol and the second protocol may be separately determined based on requirements of the first accelerator and the second accelerator for protocols. For example, the first accelerator is a processor (for example, a CPU or a GPU), and the requirement of the first accelerator for the protocol is high performance, high bandwidth, a low latency, and the like. The AXI protocol may meet the requirement of the first accelerator, and the first protocol may be the AXI protocol. In this case, the first accelerator may communicate with the scheduler according to the AXI protocol. The second accelerator is a DMA accelerator or an AI accelerator, and the requirement of the second accelerator for the protocol is high frequency, high efficiency, and the like. The AHB protocol may meet the requirement of the second accelerator, and the second protocol may be the AHB protocol. In this case, the second accelerator may communicate with the adapter according to the AHB protocol. In addition, for some low-speed and low-power accelerators, a protocol used by the accelerators may be an APB protocol, ..., and is not enumerated herein.

It should be noted that the adapter may be understood as a special type of scheduler, the scheduler may be understood as a primary scheduler, the adapter may be understood as a secondary scheduler, and the adapter (the secondary scheduler) may have a same task scheduling capability as the scheduler (the primary scheduler). In different designs, role settings of the primary scheduler and the secondary scheduler may be adjusted, that is, the scheduler may be designed as the primary scheduler, or may be designed as the secondary scheduler (referred to as the adapter in this case). The adapter may be designed as the secondary scheduler, or may be designed as the primary scheduler (referred to as the scheduler in this case). For example, in the structure design shown in FIG. 2, the adapter [1010] that serves as the secondary scheduler may not directly obtain a task from the upper-layer software. Instead, the scheduler [1000] that serves as the primary scheduler may uniformly obtain tasks from the upper-layer software, and then the adapter [1010] obtains a task from the scheduler [1000] for scheduling. Optionally, in some possible designs, the adapter of the second die may also be used as the primary scheduler, obtain tasks from the upper-layer software, and deliver a part of the tasks to the scheduler of the first die (in this case, the scheduler is the secondary scheduler).

For example, protocol conversion performed by the adapter between the scheduler and the accelerator may include providing level conversion, signal conversion, another function, and the like between the scheduler and the accelerator (for example, the second accelerator) on different dies, so that the scheduler and the accelerator on the different dies can communicate and collaborate, thereby improving overall compatibility and performance of the task processing apparatus. In other words, adapter design focuses more on compatibility and interconnection, so that the task processing apparatus can connect, through the adapter, the scheduler and the accelerator that are deployed on different dies together, and the scheduler and the accelerator can exchange data, signals, and control information normally with each other. Therefore, electrical features, signal features, and protocol features needs to be preferentially considered during the adapter design to ensure connection stability and reliability.

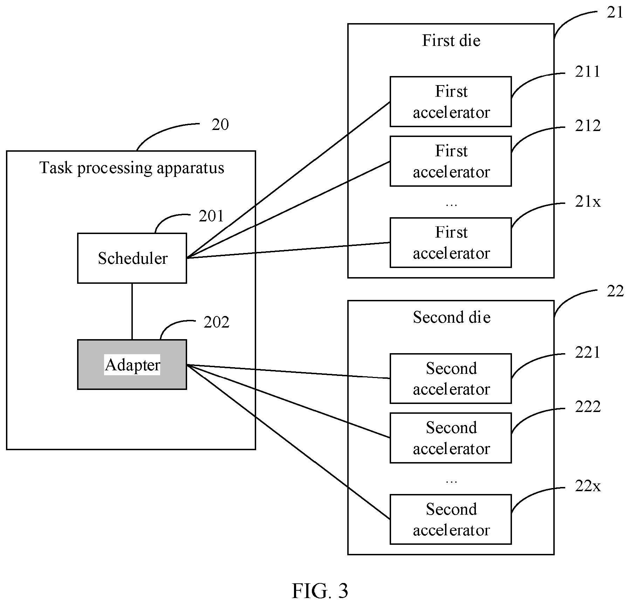

Optionally, the M first hardware accelerators are primary accelerators, and the N second hardware accelerators are secondary accelerators. For example, the M first accelerators on the first die are used as primary accelerators, and can meet a requirement in a main application scenario of the chiplet product, and are more likely to be scheduled to process tasks. The N second accelerators on the second die are used as secondary accelerators, and are configured to meet another function requirement related to the main application scenario. For example, it is assumed that the task processing apparatus in FIG. 2 is mainly applied to an AI scenario, an AI accelerator may be deployed on the first die as the primary accelerator, and some other accelerators (such as a DMA accelerator and a DSA accelerator) may be deployed on the second die as the secondary accelerators. Alternatively, it is assumed that the task processing apparatus in FIG. 2 is mainly applied to a graphics processing scenario, a GPU may be deployed on the first die as the primary accelerator, and some other accelerators (such as a DMA accelerator, a DSA accelerator, and an AI accelerator) may be deployed on the second die as the secondary accelerators. In other words, what accelerators are the primary accelerator and the secondary accelerator in the task processing apparatus respectively and what specific functions of the accelerators are mainly depend on functions that need to be met in a scenario targeted by the chiplet product. The primary accelerator is configured to meet a main function requirement in the scenario, and the secondary accelerator may be configured to meet another secondary function requirement related to the scenario. Further, optionally, the scheduler and the primary accelerators may be deployed together (both are deployed on the first die, as shown in FIG. 2). Alternatively, the scheduler and the primary accelerators are not deployed on a same die, but the scheduler may directly schedule the primary accelerators (as shown in FIG. 3). In this way, when a chiplet product completes a task in a main scenario, scheduling paths of the scheduler for the primary accelerators can be reduced, so that the primary accelerators can respond to the task more quickly, thereby further improving overall performance of the chiplet.

Optionally, the primary accelerators may be deployed on a same die as the scheduler, or may be deployed on a same die as the adapter, and the scheduler or the adapter schedules the primary accelerators. For example, an area of the first die is limited, and a quantity of primary accelerators on the first die is limited. In this case, when the quantity of primary accelerators needs to be further increased to meet more requirements, in one manner, the first die may be updated, and a first die that includes a larger quantity of primary accelerators is used; and in another manner, a part of primary accelerators may be additionally deployed when secondary accelerators are deployed on the second die, and the part of accelerators may be scheduled by the adapter. It may be understood that, if the scheduler and the primary accelerators deployed on the second die meet a condition requirement of cross-die interconnection, the scheduler may also be interconnected with these primary accelerators, and may directly schedule these primary accelerators without using the adapter to schedule the primary accelerators.

FIG. 2 shows only an example of a structure in which the task processing apparatus includes one first die and one second die. In a possible implementation, the task processing apparatus provided in this embodiment of this application may alternatively include a plurality of first dies and a plurality of second dies. Each first die may include a scheduler and M first accelerators. The scheduler may communicate with the M first accelerators according to a first protocol. Quantities of first accelerators on different first dies may be the same or may be different, and first protocols that are complied with between the schedulers and the first accelerators on different first dies may be the same or may be different. Each second die may include an adapter and N second accelerators. The adapter may communicate with the N second accelerators according to a second protocol. Quantities of second accelerators on different second dies may be the same or may be different, and second protocols that are complied with between adapters and second accelerators on different second dies may be the same or may be different. The scheduler of the first die and the adapter of the second die may communicate with each other according to a third protocol. Third protocols that are complied with between different schedulers and adapters may be the same or may be different. Both M and N are integers greater than 0. Optionally, the plurality of first dies may be isomorphic or heteromorphic, or may be homogeneous or heterogeneous. Further, optionally, the plurality of second dies may be isomorphic or heteromorphic, or may be homogeneous or heterogeneous. Further, optionally, the first die and the second die may be isomorphic or heteromorphic, or may be homogeneous or heterogeneous. For example, the task processing apparatus includes two first dies and three second dies. The two first dies may be manufactured by using a same process (corresponding to isomorphism, for example, both using 14 nm, 7 nm, and 5 nm), or may be separately manufactured by using different processes (corresponding to heteromorphism, for example, one using 14 nm, and the other using 7 nm). Further, the two first dies may be made of a same material (or material composition) (corresponding to homogeneity, for example, both using silicon Si, gallium nitride GaN, and indium phosphide InP), or may be made of different materials (corresponding to heterogeneity, for example, one using Si, and the other using GaN). Similarly, the three second dies may be isomorphic or heteromorphic, or may be homogeneous or heterogeneous; and the first die and the second die may be isomorphic or heteromorphic, or may be homogeneous or heterogeneous. This is not specifically limited herein.

The foregoing uses a structure in which the scheduler and the first accelerators are deployed on a same die, and the adapter and the second accelerators are deployed on a same die as an example to briefly describe the task processing apparatus provided in this application, and shall not constitute a structural limitation on the task processing apparatus provided in this application. For ease of understanding, the following uses a structure in which the scheduler and the first accelerators are separately deployed and the adapter and the second accelerators are separately deployed as an example to describe the task processing apparatus provided in this application.

Refer to FIG. 3. FIG. 3 is a diagram of a structure of another task processing apparatus according to an embodiment of this application. The task processing apparatus [20] may include a scheduler [201] and an adapter [202]. The scheduler [201] is coupled to a first die [21], the adapter [202] is coupled to a second die [22], and the first die [21] may include M first accelerators [211 to 21x], and the second die [22] may include N second accelerators [221 to 22x]. Both M and N are integers greater than 0. Optionally, the scheduler [201] may communicate with the M first accelerators [211 to 21x] on the first die [21] according to a first protocol; the adapter [202] may communicate with the N second accelerators [221 to 22x] on the second die according to a second protocol; and the scheduler [201] may communicate with the adapter [202] according to a third protocol.

The scheduler [201] may be configured to: obtain a first task set from upper-layer software, where the first task set may include a first task and a second task; and then schedule, according to the first protocol, a part or all of the M first accelerators [211 to 21x] (namely, one or more target first accelerators) to process the first task.

The adapter [202] may be configured to: obtain a second task set from the scheduler [201] according to the third protocol, where the second task set includes the second task; and then schedule, according to the second protocol, a part or all of the N second accelerators [221 to 22x] (namely, one or more target second accelerators) to process the second task.

Optionally, in the task processing apparatus shown in FIG. 3, the scheduler and the adapter may be deployed on a same die, or may be deployed on different dies. This is not specifically limited herein. It should be noted that, the task processing apparatus shown in FIG. 3 may also include the first die and the second die. This is not further described herein.

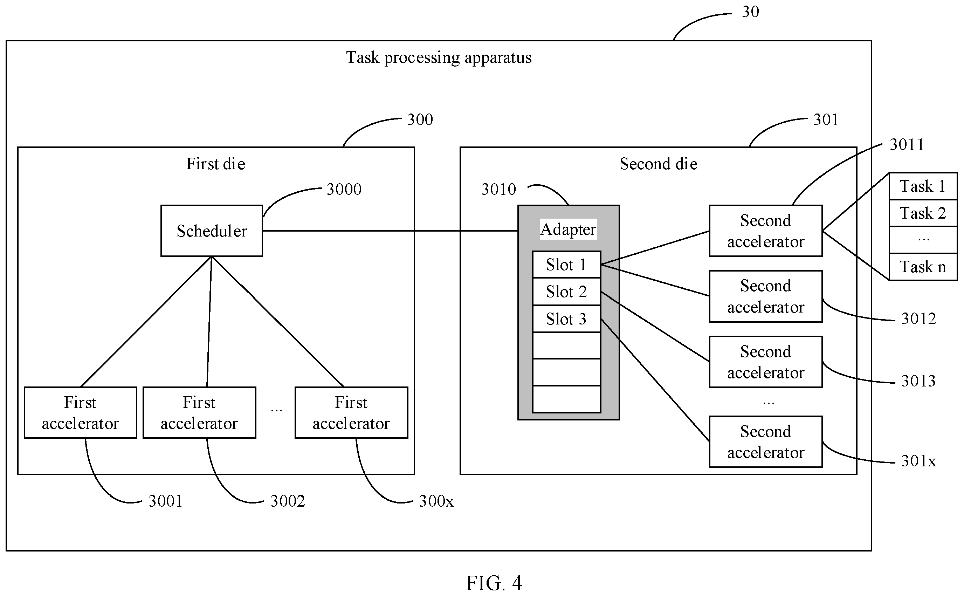

In a possible implementation, for the task processing apparatuses shown in FIG. 2 and FIG. 3, the adapter may include abstracted virtual resources (slots, namely, one or more virtual adapters). As shown in FIG. 4, the adapter [3010] may include one or more virtual adapters (such as a slot 1, a slot 2, and a slot 3), and each of the one or more virtual adapters may correspond to one or more of the N second accelerators. For example, the slot 1 corresponds to the second accelerator [3011] and the second accelerator [3012], the slot 2 corresponds to the second accelerator [3013], and the slot 3 corresponds to the second accelerator [301x]. When performing task scheduling by using the adapter [3010], the scheduler [3000] may first select an idle virtual adapter for a task, and then the virtual adapter schedules the task to one or more corresponding accelerators for processing. In other words, one virtual adapter may implement functions of task scheduling and task management of a physical adapter, and support scheduling a task to a real physical accelerator. The scheduler may flexibly invoke the second accelerators on the second die by using the virtual adapter in the adapter, and may configure these accelerators to execute one or more subtasks. Optionally, the scheduler may alternatively include abstracted virtual resources (namely, one or more virtual schedulers not shown in FIG. 4). Each of the one or more virtual schedulers may correspond to one or more of the M first accelerators. The scheduler may schedule the M first accelerators by using the one or more virtual schedulers to process tasks. In the foregoing, the task processing apparatus can schedule and manage to-be-processed tasks and the accelerators more conveniently by using the virtual scheduling resources (including the virtual scheduler and the virtual adapter), so that scheduling is more flexible.

The foregoing describes the structure of the task processing apparatus provided in embodiments of this application by using an example. The following describes a processing method provided in embodiments of this application. For ease of understanding, the following briefly describes, based on the task processing apparatus shown in FIG. 2 and with reference to a task processing process, the processing method provided in an embodiment of this application. It may be understood that the processing method provided in this embodiment of this application may also be applied to the task processing apparatus shown in FIG. 3 and other task processing apparatuses obtained by transforming the task processing apparatuses shown in FIG. 2 and FIG. 3. This is not specifically limited herein.

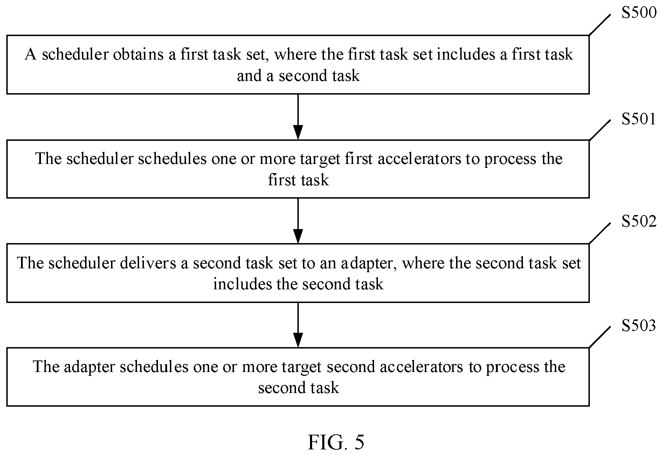

FIG. 5 is a schematic flowchart of a processing method according to an embodiment of this application. For example, the method is applied to the task processing apparatus shown in FIG. 2 or FIG. 4, and includes but is not limited to the following steps S500 to S503.

S500: A scheduler obtains a first task set, where the first task set includes a first task and a second task.

The scheduler may obtain the first task and the second task from upper-layer software. For example, the upper-layer software may be an operating system, or other task management software or application management software. The first task and the second task may be various requests initiated by various applications. For example, the first task may be a compute task that needs to be processed by an accelerator CPU, or may be a transfer task that needs to be processed by an accelerator DMA, or another task that needs to be processed by a dedicated accelerator DSA. This is not specifically limited herein.

Optionally, after obtaining the first task and the second task, the scheduler may first determine accelerators that need to be used to process the first task and the second task, and then schedule these accelerators to process the first task and the second task. For example, the scheduler may determine, based on task information and configuration information of the to-be-processed task, the accelerator required for processing the task. The task information may be obtained when the scheduler obtains the task. The task information may indicate information such as a task type and a task identifier (ID) of the to-be-processed task, and may further indicate a security level requirement of the task, a storage address of data required for processing the task, a storage address of data obtained by executing the task, and the like. In brief, when the task information is finally sent to the accelerator, the accelerator needs to know where input data required for processing the task is, what operation (for example, an addition or subtraction operation) is performed on the input data, where output data obtained by performing the operation is stored, and the like. The configuration information may be configured in advance by the upper-layer software and delivered to the scheduler, and may be specifically delivered before the scheduler obtains the task, or may be delivered when the scheduler obtains the task, or may be delivered within a specific period of time after the scheduler obtains the task. This is not specifically limited herein. The configuration information may indicate a configuration relationship between various types of tasks and various types of accelerators. In this case, the configuration information may be referred to as full configuration information, and may be generally obtained by the scheduler before the scheduler obtains the task. Alternatively, the configuration information may indicate only a configuration relationship between a task and various types of accelerators. In this case, the configuration information may be referred to as partial configuration information, and may be generally obtained by the scheduler when the scheduler obtains the task or within a period of time after the scheduler obtains the task.

For example, the scheduler determines one or more target first accelerators to process the first task. The scheduler may obtain first configuration information, where the first configuration information indicates a first configuration relationship between the first task and the one or more target first accelerators. The scheduler may determine the one or more target first accelerators based on the first task information and the first configuration information of the first task, where the one or more target first accelerators are a part or all of the M first accelerators. The first configuration relationship indicated by the first configuration information may include one or more of a correspondence between a task type of the first task and an accelerator type of the target first accelerator, a quantity of target first accelerators corresponding to the first task, or a security level of the target first accelerator corresponding to the first task. Further, the first configuration information may further indicate an execution priority of the first task. If the priority is high, the first task may be preferentially processed. For example, if the first task is a compute task, the target first accelerator corresponding to the first task should be a CPU, or a type of accelerator that is used for computing and that is similar to the CPU. A quantity of target first accelerators that need to be used for the first task is 2 (or may be another quantity, which is not limited). A security level requirement of the first task is high. For example, a required security level is 2 (a lower value indicates a higher level), and the corresponding target first accelerator should meet the security level requirement of the first task, that is, a security level of the accelerator should also be 2 or a higher level. It is assumed that a quantity of first accelerators that can be used for computing in the M first accelerators is 6 (sequence numbers are 1 to 6), where a level of accelerators 1 and 2 is 1, a level of accelerators 3 and 4 is 2, and a level of accelerators 5 and 6 are 3. The scheduler may select two idle accelerators from the accelerators 1 to 4 to process the first task, or may preferentially select the accelerators 3 and 4 whose security level is 2 to process the first task. In conclusion, the scheduler may determine, based on configuration information and task information of a task, an accelerator type, an accelerator quantity, and an accelerator security level that are required for processing the task, so as to determine, based on current statuses of a plurality of accelerators, accelerators that can be scheduled to process the task.

S501: The scheduler schedules the one or more target first accelerators to process the first task.

After determining the one or more target first accelerators from the M first accelerators, the scheduler schedules, according to the first protocol that these accelerators comply with, the one or more target first accelerators to process the first task, or schedules the first task to these accelerators for processing. Optionally, the scheduler may include abstracted virtual resources (namely, one or more virtual schedulers), and one of the one or more virtual schedulers corresponds to one or more of the M first accelerators. Therefore, the scheduler may schedule, by using the one or more virtual schedulers, the one or more target first accelerators to process the first task. Optionally, when one virtual scheduler corresponds to a plurality of first accelerators, when scheduling a task to the accelerators for processing, the virtual scheduler may simultaneously schedule the task to the plurality of first accelerators for processing, or may schedule the task to only a part of the plurality of first accelerators for processing, or may split the task into a plurality of subtasks corresponding to a quantity of accelerators, and separately schedule the subtasks to the plurality of first accelerators for processing. This is not specifically limited herein. In addition, after the first task is processed, the one or more target first accelerators may output a processing result to a memory or a register of the task processing apparatus.

Optionally, when the scheduler includes one or more abstracted virtual schedulers, a quantity of virtual schedulers in the scheduler and a quantity of first accelerators corresponding to each virtual scheduler may be extended by delivering a configuration from the upper-layer software. For example, the scheduler may first obtain third configuration information from the upper-layer software, where the third configuration information indicates to adjust a quantity of virtual schedulers in the scheduler, and/or indicates to adjust a quantity of first accelerators corresponding to a target virtual scheduler in the scheduler; and then the scheduler adjusts the quantity of virtual schedulers based on the third configuration information, and/or adjusts the quantity of first accelerators corresponding to the target virtual scheduler. The target virtual scheduler is any one of the one or more virtual schedulers. For example, when the quantity of virtual schedulers needs to be adjusted, the quantity of virtual schedulers and a memory address segment that can be used by each virtual scheduler may be configured in the third configuration information. For example, address space is 0 to 1 GB, the quantity of virtual schedulers is 4 (sequence numbers 1 to 4), a virtual scheduler 1 corresponds to 0 to 250 MB, a virtual scheduler 2 corresponds to 251 MB to 500 MB, ..., and the like. In this way, the quantity of virtual schedulers in the schedulers is adjusted. For another example, when the quantity of first accelerators corresponding to the virtual scheduler needs to be adjusted, an identifier (ID) of the target virtual scheduler and identifiers (IDs) of a plurality of first accelerators corresponding to the target virtual scheduling may be configured in the third configuration information, to establish a mapping relationship between the target virtual scheduler and the plurality of first accelerators. For example, the virtual scheduler 1 corresponds to a first accelerator 1, a first accelerator 2, and a first accelerator 3. When the scheduler has a large quantity of to-be-processed tasks, and a plurality of accelerators need to be simultaneously scheduled to process a plurality of tasks in parallel, a quantity of virtual schedulers may be increased, and then the plurality of virtual schedulers separately schedule the accelerators to process different tasks in parallel, so that a quantity of tasks in a task queue of the scheduler can be quickly reduced, and performance of the task processing apparatus can be improved. When some large to-be-processed tasks in the scheduler need to simultaneously occupy a plurality of accelerators for joint processing, a quantity of accelerators corresponding to a virtual scheduler may be increased, and the virtual scheduler simultaneously schedules the plurality of accelerators to process the large task, thereby improving task processing efficiency and improving performance of a virtual apparatus.

S502: The scheduler delivers a second task set to the adapter, where the second task set includes the second task.

When determining that an accelerator that can be scheduled to process the second task is an accelerator in the N second accelerators, the scheduler may deliver the second task to the adapter (which may be delivered in a manner of a task set, for example, the second task set) according to the third protocol. Correspondingly, the adapter obtains the second task set from the scheduler.

Optionally, when delivering the second task to the adapter, the scheduler may further indicate the adapter to specifically schedule a specific second accelerator or second accelerators to process the second task. In other words, after obtaining the second task, when determining that the second task needs to be processed by the second accelerator, the scheduler may directly determine, from the N second accelerators, one or more target second accelerators used to process the second task, and indicate the adapter to schedule the one or more target second accelerators to process the second task. For example, the scheduler may indicate, based on an accelerator ID, the one or more target second accelerators that the adapter specifically needs to schedule.

Optionally, the accelerators used to process the second task may not be indicated by the scheduler. Instead, after obtaining the second task, the adapter may determine, from the N second accelerators, the accelerators that need to be used to process the second task, and then schedule the accelerators to process the task. For example, a manner in which the adapter determines the accelerator may be similar to a manner in which the scheduler determines the accelerator. For example, the adapter may determine, based on task information and configuration information of a to-be-processed task, an accelerator required for processing the task. The task information may be delivered by the scheduler to the adapter together with the task. The task information may indicate information such as a task type and a task identifier (ID) of the to-be-processed task, and may further indicate a security level requirement of the task, a storage address of data required for processing the task, a storage address of data obtained by executing the task, and the like. The configuration information may be full configuration information or partial configuration information that is obtained by the scheduler from the upper-layer software and then forwarded to the adapter, or may be partial configuration information that is additionally generated by the scheduler for the second task and the full configuration information and sent to the adapter. For example, the scheduler selects configuration information related to the second task from the full configuration information, obtains the partial configuration information, and sends the partial configuration information to the adapter. The configuration information may be delivered before the adapter obtains the task, or may be delivered when the adapter obtains the task, or may be delivered within a specific period of time after the scheduler obtains the task. This is not specifically limited herein. For example, the adapter may determine one or more target second accelerators from the N second accelerators based on second task information and second configuration information of the second task. For related descriptions, refer to the foregoing description of determining the one or more target first accelerators by the scheduler. Details are not described herein again. It should be noted that when both the first configuration information and the second configuration information is full configuration information, the first configuration information and the second configuration information may be same information.

S503: The adapter schedules the one or more target second accelerators to process the second task.

After determining the one or more target second accelerators from the N second accelerators, the adapter schedules, according to the second protocol that these accelerators comply with, the target second accelerators to process the second task. Optionally, the adapter may include abstracted virtual resources (namely, one or more virtual adapters), and one of the one or more virtual adapters corresponds to one or more of the N second accelerators. Therefore, the adapter may schedule, by using the one or more virtual adapters, the one or more target second accelerators to process the second task. In addition, after the second task is processed, the one or more target second accelerators may output a processing result to a memory or a register of the task processing apparatus.

Optionally, when the adapter includes one or more abstracted virtual adapters, a quantity of virtual adapters in the adapter and a quantity of second accelerators corresponding to each virtual adapter may be extended by delivering a configuration from the upper-layer software. For example, the scheduler first obtains fourth configuration information from the upper-layer software, and sends the fourth configuration information to the adapter, where the fourth configuration information indicates to adjust a quantity of virtual adapters in the adapter, and/or indicates to adjust a quantity of second accelerators corresponding to a target virtual adapter in the adapter. Correspondingly, the adapter receives the fourth configuration information, and adjusts, based on the information, the quantity of virtual adapters, and/or adjusts the quantity of second accelerators corresponding to the target virtual adapter. For a configuration manner of the fourth configuration information, refer to the foregoing related description of the third configuration information. Details are not described herein again.

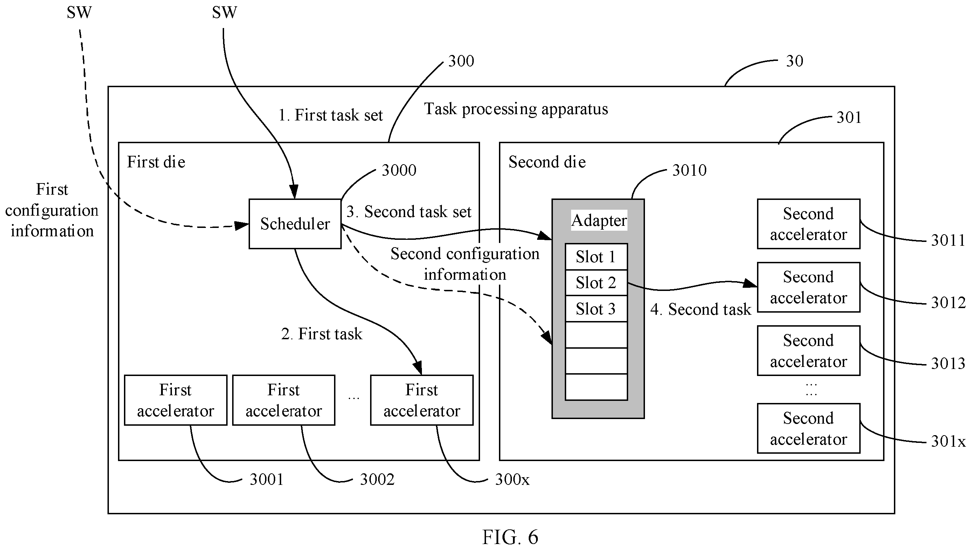

For ease of understanding, the following associates a structure of the task processing apparatus shown in FIG. 4 with a processing procedure related to the processing method shown in FIG. 5. As shown in FIG. 6, the processing procedure may include but is not limited to the following steps: 1. A scheduler [3000] first obtains a first task set from upper-layer software (SW), where the first task set includes a first task and a second task. 2. The scheduler [3000] schedules a first accelerator [300x] to process the first task. 3. The scheduler [3000] delivers a second task set to an adapter [3010], where the second task set includes the second task. 4. The adapter [3010] schedules a second accelerator [3012] to process the second task. Optionally, the foregoing processing procedure may further include a step of obtaining, by the scheduler [3000] and the adapter [3010], configuration information (such as first configuration information and second configuration information).

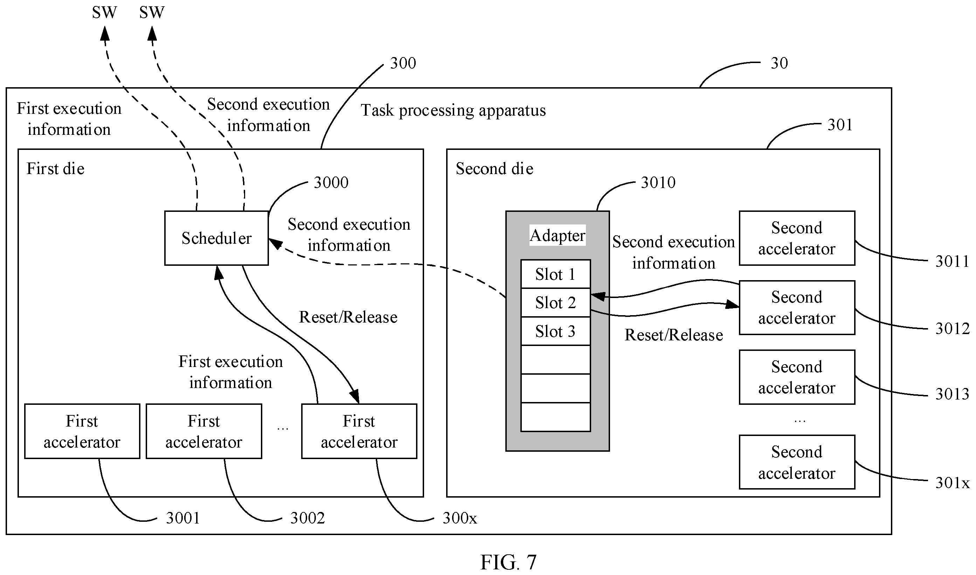

In a possible implementation, after scheduling the accelerator to process the task, the scheduler and the adapter may further obtain a task processing status of the accelerator. As shown in FIG. 7, after the scheduler [3000] schedules one or more target first accelerators [300x] to process the first task (namely, step S501), the scheduler [3000] may further receive task execution information (namely, first execution information) fed back by the one or more target first accelerators [300x]. The first execution information indicates an execution status of the first task, and the execution status of the task may include an execution error (for example, interruption) and execution completion. Optionally, when an error occurs during execution of the first task, the scheduler [3000] may send a reset command to the first accelerator [300x] that fails to execute the task, to indicate the first accelerator [300x] to perform reset, to avoid that the task cannot be completed; or when execution of the first task is completed, the scheduler [3000] may send a release command to the first accelerator [300x] that completes the task, to release the first accelerator [300x], so that the scheduler [3000] can subsequently schedule the first accelerator [300x] to process another task. Further, the scheduler may determine, based on the task execution information fed back by the accelerators, whether to send the reset command and the release command, or the scheduler may send the obtained task execution information to the upper-layer software, and the upper-layer software determines whether to indicate the scheduler to send the reset command or the release command. This is not specifically limited herein. It may be understood that the task execution information may be a part of data field segments that are agreed upon by the scheduler, the adapter, and the upper-layer software and that adapt to each other. The task execution information should include information about the accelerator (for example, an accelerator ID) and task information (for example, a task ID) of the task executed by the accelerator.

In a possible implementation, as shown in FIG. 7, after the adapter [3010] schedules the one or more target second accelerators [3012] to process the second task (namely, step S503), the adapter [3010] may further receive task execution information (namely, second execution information) fed back by the one or more target second accelerators [3012], where the second execution information indicates an execution status of the second task. Similar to the scheduler [3000], for different task execution statuses, the adapter [3010] may send different commands. For example, when an error occurs during execution of the second task, the adapter [3010] may send a reset command to the second accelerator [3012] that fails to execute the task; or when execution of the second task is completed, the adapter [3010] may send a release command to the second accelerator [3012] that completes the task. The adapter may determine, based on the task execution information fed back by the accelerators, whether to send the reset command and the release command; or the adapter forwards the task execution information to the scheduler, and the scheduler determines, based on the task execution information, whether to send the reset command and the release command; or the scheduler sends the obtained task execution information to the upper-layer software, and the upper-layer software determines whether to send the reset command and the release command. This is not specifically limited herein.

It should be noted that, when the task processing apparatus includes a plurality of first dies and a plurality of second dies, each first die includes a scheduler and M first accelerators, and each second die includes an adapter and N second accelerators, there may be a case in which schedulers on different first dies need to deliver different tasks to a same second accelerator on a same second die for processing. Because one accelerator can be occupied by only one task at the same time, in this case, different tasks delivered by the plurality of schedulers may be queued in a queue, and are processed in sequence when the accelerator is idle.

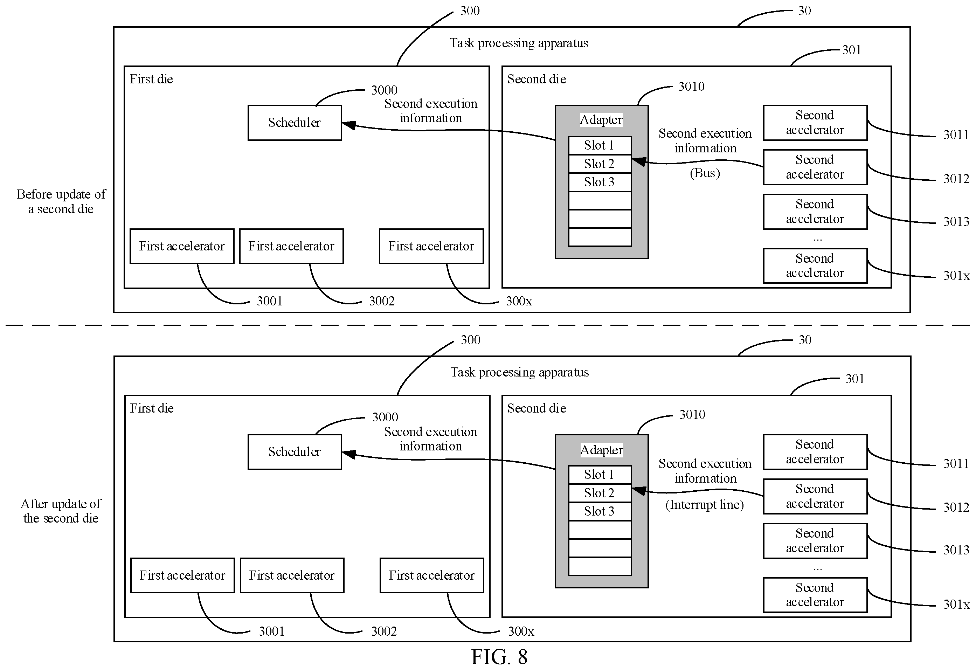

In conclusion, different from a chiplet structure including a scheduler in the conventional technology, this application provides a task processing apparatus structure including a scheduler and an adapter. An adapter is added to shield solidified interfaces between the scheduler and various accelerators deployed on other dies. The scheduler is decoupled from the accelerators on the other dies, so that independent evolution between different dies in a chiplet product can be supported. After each die independently evolves, the scheduler may schedule, by using the adapter, an accelerator (an advanced or outdated accelerator) that may not be normally scheduled by the scheduler. The scheduler may directly schedule another accelerator that can be normally scheduled by the scheduler, so that accelerator resources of the chiplet product can be scheduled as much as possible to process tasks, thereby ensuring overall performance of the chiplet. The task processing apparatus shown in FIG. 4 is used as an example. It is assumed that the second accelerators [3011 to 301x] (IP cores) on the second die [301] is a hard core purchased from the outside, and a chip designer cannot autonomously modify the IP cores. As shown in FIG. 8, before the second die is updated, an initial interaction manner of the IP core (the second accelerator [3012]) is sending or receiving a message through a bus, and after the second die is updated, the IP core (the second accelerator [3012]) may change to report task execution information (such as the second execution information) through an interrupt line. In this case, the adapter [3010] may convert the interrupt into information that can be identified by the scheduler [3000] and send the information to the scheduler [3000]. In this case, if there is no adapter [3010] to implement decoupling between the scheduler [3000] and the IP core (the second accelerator [3012]), the scheduler [3000] may not be able to identify the task execution information. Consequently, the scheduler [3000] cannot normally schedule the updated IP core (the second accelerator [3012]).

This application further provides a semiconductor chip. The chip includes the task processing apparatus provided in all the foregoing embodiments of this application. It may be understood that, for functions and functions of the parts in the task processing apparatus, refer to specific implementations in embodiments in FIG. 2 to FIG. 4. Details are not described herein again.

This application further provides an electronic device, and the electronic device includes the task processing apparatus provided in all the foregoing embodiments of this application. It may be understood that, for functions and functions of the parts in the task processing apparatus, refer to specific implementations in embodiments in FIG. 2 to FIG. 4. Details are not described herein again. Optionally, the electronic device may further include a communication interface, used for communication between the electronic device and another device or a communication network.

This application further provides an electronic device. The electronic device has a function of implementing the processing method of any one of the foregoing task processing apparatuses. The function may be implemented by hardware, or may be implemented by hardware executing corresponding software. The hardware or the software includes one or more modules corresponding to the function.

This application provides a computer storage medium, where the computer storage medium stores a computer program, and when the computer program is executed, the foregoing task processing apparatus can perform functions in the foregoing processing method procedure.

This application provides a computer program, where the computer program includes instructions, and when the computer program is executed, the foregoing task processing apparatus can perform functions in the foregoing processing method procedure.

This application provides a chip system. The chip system includes any one of the foregoing task processing apparatuses. In a possible design, the chip system further includes a memory, and the memory is configured to store program instructions and data that are necessary or related to the task processing apparatus. The chip system may include a chip, or may include a chip and another discrete component.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In the several embodiments provided in this application, the displayed or discussed mutual couplings or direct couplings or communication connections may be implemented by using some interfaces. The indirect couplings or communication connections between the apparatuses or units may be an electrical, mechanical, or other form of connection.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A task processing apparatus, wherein the apparatus comprises a first die and a second die, the first die comprises a scheduler and M first accelerators, and the second die comprises an adapter and N second accelerators, wherein
the scheduler is configured to:
obtain a first task set from upper-layer software, wherein the first task set comprises a first task and a second task;
and
schedule one or more target first accelerators from the M first accelerators to process the first task; and
the adapter is configured to:
obtain a second task set from the scheduler, wherein the second task set comprises the second task; and
schedule one or more target second accelerators from the N second accelerators to process the second task.

2. The apparatus according to claim 1, wherein the scheduler communicates with the M first accelerators according to a first protocol, the adapter communicates with the N second accelerators according to a second protocol, and the scheduler communicates with the adapter according to a third protocol.

3. The apparatus according to claim 2, wherein the first protocol is different from the second protocol, the first protocol comprises an advanced extensible interface AXI protocol, and the second protocol comprises an advanced high-performance bus AHB protocol.

4. The apparatus according to any one of claims 2 and 3, wherein the scheduler comprises a first interface, a second interface, and a third interface, and the adapter comprises a fourth interface and a fifth interface; the scheduler is connected to the M first accelerators through the first interface, and the first interface complies with the first protocol; the scheduler is connected to the fourth interface of the adapter through the second interface, and the second interface and the fourth interface comply with the third protocol; the scheduler obtains the first task set from the upper-layer software through the third interface; and the adapter is connected to the N second accelerators through the fifth interface, and the fifth interface complies with the second protocol.

5. The apparatus according to any one of claims 1 to 4, wherein the scheduler is further configured to:
obtain first configuration information, wherein the first configuration information indicates a first configuration relationship between the first task and the one or more target first accelerators, and the first configuration relationship comprises one or more of a correspondence between a task type of the first task and a type of the target first accelerator, a quantity of target first accelerators corresponding to the first task, or a security level of the target first accelerator corresponding to the first task; and
determine the one or more target first accelerators based on first task information of the first task and the first configuration information, wherein the first task information comprises one or more of the task type or a task identifier of the first task.

6. The apparatus according to any one of claims 1 to 5, wherein the adapter is further configured to:
obtain second configuration information, wherein the second configuration information indicates a second configuration relationship between the second task and the one or more target second accelerators, and the second configuration relationship comprises one or more of a correspondence between a task type of the second task and a type of the target second accelerator, a quantity of target second accelerators corresponding to the second task, or a security level of the target second accelerator corresponding to the second task; and
determine the one or more target second accelerators based on second task information of the second task and the second configuration information, wherein the second task information comprises one or more of the task type or a task identifier of the second task.

7. The apparatus according to any one of claims 1 to 6, wherein the scheduler is further configured to:
obtain first execution information, wherein the first execution information indicates an execution status of the first task; and
when the execution status of the first task comprises an error occurring during task execution, send a first reset command, wherein the first reset command indicates to reset an accelerator that fails to execute the first task; or
when the execution status of the first task comprises task execution completion, send a first release command, wherein the first release command indicates to release an accelerator that completes execution of the first task.

8. The apparatus according to any one of claims 1 to 7, wherein the adapter is further configured to:
obtain second execution information, wherein the second execution information indicates an execution status of the second task; and
when the execution status of the second task comprises an error occurring during task execution, send a second reset command, wherein the second reset command indicates to reset an accelerator that fails to execute the second task; or
when the execution status of the second task comprises task execution completion, send a second release command, wherein the second release command indicates to release an accelerator that completes execution of the second task.

9. The apparatus according to any one of claims 1 to 8, wherein the M first accelerators are primary accelerators, and the N second accelerators are secondary accelerators.

10. The apparatus according to any one of claims 1 to 9, wherein the scheduler comprises one or more virtual schedulers, one of the one or more virtual schedulers corresponds to one or more of the M first accelerators, and the scheduler is specifically configured to:
determine one or more target virtual schedulers from the one or more virtual schedulers, wherein the one or more target virtual schedulers correspond to the one or more target first accelerators, and the one or more target virtual schedulers are in an idle state; and
schedule, by using the one or more target virtual schedulers, the one or more target first accelerators to process the first task.

11. The apparatus according to claim 10, wherein the scheduler is further configured to:
obtain third configuration information from the upper-layer software, wherein the third configuration information indicates to adjust a quantity of virtual schedulers in the scheduler, and/or indicates to adjust a quantity of first accelerators corresponding to a target virtual scheduler in the scheduler; and
based on the third configuration information, adjust the quantity of virtual schedulers, and/or adjust the quantity of first accelerators corresponding to the target virtual scheduler, wherein the target virtual scheduler is any one of the one or more virtual schedulers.

12. The apparatus according to any one of claims 1 to 11, wherein the adapter comprises one or more virtual adapters, one of the one or more virtual adapters corresponds to one or more of the N second accelerators, and the adapter is specifically configured to:
determine one or more target virtual adapters from the one or more virtual adapters, wherein the one or more target virtual adapters correspond to the one or more target second accelerators, and the one or more target virtual adapters are in an idle state; and
schedule, by using the one or more target virtual adapters, the one or more target second accelerators to process the second task.

13. The apparatus according to claim 12, wherein the scheduler is further configured to:
obtain fourth configuration information from the upper-layer software, and send the fourth configuration information to the adapter, wherein the fourth configuration information indicates to adjust a quantity of virtual adapters in the adapter, and/or indicates to adjust a quantity of second accelerators corresponding to a target virtual adapter in the adapter; and
the adapter is further configured to:
receive the fourth configuration information, and based on the fourth configuration information, adjust the quantity of virtual adapters, and/or adjust the quantity of second accelerators corresponding to the target virtual adapter, wherein the target virtual adapter is any one of the one or more virtual adapters.

14. The apparatus according to any one of claims 1 to 13, wherein the first die and the second die are isomorphic or heteromorphic, and/or the first die and the second die are homogeneous or heterogeneous.

15. A first die, wherein the first die comprises a scheduler and M first accelerators, wherein
the scheduler is configured to:
obtain a first task set from upper-layer software, wherein the first task set comprises a first task and a second task;
schedule one or more target first accelerators from the M first accelerators to process the first task; and
deliver a second task set to an adapter of a second die, wherein the second task set comprises the second task.

16. The die according to claim 15, wherein the scheduler communicates with the M first accelerators according to a first protocol.

17. The die according to claim 16, wherein the scheduler comprises a first interface, a second interface, and a third interface; the scheduler is connected to the M first accelerators through the first interface, and the first interface complies with the first protocol; the scheduler is connected to a fourth interface of the adapter through the second interface, and the second interface and the fourth interface comply with a third protocol; and the scheduler obtains the first task set from the upper-layer software through the third interface.

18. The die according to any one of claims 15 to 17, wherein the scheduler is further configured to:
obtain first configuration information, wherein the first configuration information indicates a first configuration relationship between the first task and the one or more target first accelerators, and the first configuration relationship comprises one or more of a correspondence between a task type of the first task and a type of the target first accelerator, a quantity of target first accelerators corresponding to the first task, or a security level of the target first accelerator corresponding to the first task; and
determine the one or more target first accelerators based on first task information of the first task and the first configuration information, wherein the first task information comprises one or more of the task type or a task identifier of the first task.

19. The die according to any one of claims 15 to 18, wherein the scheduler is further configured to:
obtain first execution information, wherein the first execution information indicates an execution status of the first task; and
when the execution status of the first task comprises an error occurring during task execution, send a first reset command, wherein the first reset command indicates to reset an accelerator that fails to execute the first task; or
when the execution status of the first task comprises task execution completion, send a first release command, wherein the first release command indicates to release an accelerator that completes execution of the first task.

20. The die according to any one of claims 15 to 19, wherein the M first accelerators are primary accelerators.

21. The die according to any one of claims 15 to 20, wherein the scheduler comprises one or more virtual schedulers, one of the one or more virtual schedulers corresponds to one or more of the M first accelerators, and the scheduler is specifically configured to:
determine one or more target virtual schedulers from the one or more virtual schedulers, wherein the one or more target virtual schedulers correspond to the one or more target first accelerators, and the one or more target virtual schedulers are in an idle state; and
schedule, by using the one or more target virtual schedulers, the one or more target first accelerators to process the first task.

22. The die according to claim 21, wherein the scheduler is further configured to:
obtain third configuration information from the upper-layer software, wherein the third configuration information indicates to adjust a quantity of virtual schedulers in the scheduler, and/or indicates to adjust a quantity of first accelerators corresponding to a target virtual scheduler in the scheduler; and
based on the third configuration information, adjust the quantity of virtual schedulers, and/or adjust the quantity of first accelerators corresponding to the target virtual scheduler, wherein the target virtual scheduler is any one of the one or more virtual schedulers.

23. A second die, wherein the second die comprises an adapter and N second accelerators, and
the adapter is configured to:
obtain a second task set from a scheduler of a first die, wherein the second task set comprises a second task; and
schedule one or more target second accelerators from the N second accelerators to process the second task.

24. The die according to claim 15, wherein the adapter communicates with the N second accelerators according to a second protocol.

25. The die according to claim 24, wherein the adapter comprises a fourth interface and a fifth interface, the adapter is connected to the N second accelerators through the fifth interface, the fifth interface complies with the second protocol, the adapter is connected to a second interface of the scheduler through the fourth interface, and the second interface and the fourth interface comply with a third protocol.

26. The die according to any one of claims 23 to 25, wherein the adapter is further configured to:
obtain second configuration information, wherein the second configuration information indicates a second configuration relationship between the second task and the one or more target second accelerators, and the second configuration relationship comprises one or more of a correspondence between a task type of the second task and a type of the target second accelerator, a quantity of target second accelerators corresponding to the second task, or a security level of the target second accelerator corresponding to the second task; and
determine the one or more target second accelerators based on second task information of the second task and the second configuration information, wherein the second task information comprises one or more of the task type or a task identifier of the second task.

27. The die according to any one of claims 23 to 26, wherein the adapter is further configured to:
obtain second execution information, wherein the second execution information indicates an execution status of the second task; and
when the execution status of the second task comprises an error occurring during task execution, send a second reset command, wherein the second reset command indicates to reset an accelerator that fails to execute the second task; or
when the execution status of the second task comprises task execution completion, send a second release command, wherein the second release command indicates to release an accelerator that completes execution of the second task.

28. The die according to any one of claims 23 to 27, wherein the N second accelerators are secondary accelerators.

29. The die according to any one of claims 23 to 28, wherein the adapter comprises one or more virtual adapters, one of the one or more virtual adapters corresponds to one or more of the N second accelerators, and the adapter is specifically configured to:
determine one or more target virtual adapters from the one or more virtual adapters, wherein the one or more target virtual adapters correspond to the one or more target second accelerators, and the one or more target virtual adapters are in an idle state; and
schedule, by using the one or more target virtual adapters, the one or more target second accelerators to process the second task.

30. The die according to claim 29, wherein the adapter is further configured to:
obtain fourth configuration information, wherein the fourth configuration information indicates to adjust a quantity of virtual adapters in the adapter, and/or indicates to adjust a quantity of second accelerators corresponding to a target virtual adapter in the adapter; and
based on the fourth configuration information, adjust the quantity of virtual adapters, and/or adjust the quantity of second accelerators corresponding to the target virtual adapter, wherein the target virtual adapter is any one of the one or more virtual adapters.

31. A processing method, applied to a scheduler of a first die, wherein the first die further comprises M first accelerators, and the method comprises:
obtaining a first task set from upper-layer software, wherein the first task set comprises a first task and a second task;
scheduling one or more target first accelerators from the M first accelerators to process the first task; and
delivering a second task set to an adapter of a second die, wherein the second task set comprises the second task.

32. The method according to claim 31, wherein the method further comprises:
obtaining first configuration information, wherein the first configuration information indicates a configuration relationship between the first task and the one or more target first accelerators, and the first configuration relationship comprises one or more of a correspondence between a task type of the first task and a type of the target first accelerator, a quantity of target first accelerators corresponding to the first task, or a security level of the target first accelerator corresponding to the first task; and
determining the one or more target first accelerators based on first task information of the first task and the first configuration information, wherein the first task information comprises one or more of the task type or a task identifier of the first task.

33. The method according to claim 31 or 32, wherein the method further comprises:
obtaining first execution information, wherein the first execution information indicates an execution status of the first task; and
when the execution status of the first task comprises an error occurring during task execution, sending a first reset command, wherein the first reset command indicates to reset an accelerator that fails to execute the first task; or
when the execution status of the first task comprises task execution completion, sending a first release command, wherein the first release command indicates to release an accelerator that completes execution of the first task.

34. The method according to any one of claims 31 to 33, wherein the scheduler comprises one or more virtual schedulers, one of the one or more virtual schedulers corresponds to one or more of the M first accelerators, and the method further comprises:
determining one or more target virtual schedulers from the one or more virtual schedulers, wherein the one or more target virtual schedulers correspond to the one or more target first accelerators, and the one or more target virtual schedulers are in an idle state; and
scheduling, by using the one or more target virtual schedulers, the one or more target first accelerators to process the first task.

35. The method according to claim 30, wherein the method further comprises:
obtaining third configuration information from the upper-layer software, wherein the third configuration information indicates to adjust a quantity of virtual schedulers in the scheduler, and/or indicates to adjust a quantity of first accelerators corresponding to a target virtual scheduler in the scheduler; and
based on the third configuration information, adjusting the quantity of virtual schedulers, and/or adjusting the quantity of first accelerators corresponding to the target virtual scheduler, wherein the target virtual scheduler is any one of the one or more virtual schedulers.

36. A processing method, applied to an adapter of a second die, wherein the second die further comprises N second accelerators, and the method comprises:
obtaining a second task set from a scheduler of a first die, wherein the second task set comprises a second task;
and
scheduling one or more target second accelerators from the N second accelerators to process the second task.

37. The method according to claim 36, wherein the method further comprises:
obtaining second configuration information, wherein the second configuration information indicates a configuration relationship between the second task and the one or more target second accelerators, and the second configuration relationship comprises one or more of a correspondence between a task type of the second task and a type of the target second accelerator, a quantity of target second accelerators corresponding to the second task, or a security level of the target second accelerator corresponding to the second task; and
determining the one or more target second accelerators based on second task information of the second task and the second configuration information, wherein the second task information comprises one or more of the task type or a task identifier of the second task.

38. The method according to claim 36 or 37, wherein the method further comprises:
obtaining second execution information, wherein the second execution information indicates an execution status of the second task; and
when the execution status of the second task comprises an error occurring during task execution, sending a second reset command, wherein the second reset command indicates to reset an accelerator that fails to execute the second task; or
when the execution status of the second task comprises task execution completion, sending a second release command, wherein the second release command indicates to release an accelerator that completes execution of the second task.

39. The method according to any one of claims 36 to 38, wherein the adapter comprises one or more virtual adapters, one of the one or more virtual adapters corresponds to one or more of the N second accelerators, and the method further comprises:
determining one or more target virtual adapters from the one or more virtual adapters, wherein the one or more target virtual adapters correspond to the one or more target second accelerators, and the one or more target virtual adapters are in an idle state; and
scheduling, by using the one or more target virtual adapters, the one or more target second accelerators to process the second task.

40. The method according to claim 39, wherein the method further comprises:
obtaining fourth configuration information, wherein the fourth configuration information indicates to adjust a quantity of virtual adapters in the adapter, and/or indicates to adjust a quantity of second accelerators corresponding to a target virtual adapter in the adapter; and
based on the fourth configuration information, adjusting the quantity of virtual adapters, and/or adjusting the quantity of second accelerators corresponding to the target virtual adapter, wherein the target virtual adapter is any one of the one or more virtual adapters.

41. A task processing apparatus, wherein the apparatus comprises a scheduler and an adapter, the scheduler is coupled to a first die, the adapter is coupled to a second die, the first die comprises M first accelerators, and the second die comprises N second accelerators, wherein
the scheduler is configured to:
obtain a first task set from upper-layer software, wherein the first task set comprises a first task and a second task;
and
schedule one or more target first accelerators from the M first accelerators to process the first task; and
the adapter is configured to:
obtain a second task set from the scheduler, wherein the second task set comprises the second task; and
schedule one or more target second accelerators from the N second accelerators to process the second task.

42. A computer-readable storage medium, wherein the storage medium stores a computer program or instructions, and when the computer program or the instructions are executed, the method according to any one of claims 31 to 40 is implemented.

43. A computer program, wherein the computer program comprises instructions, and when the computer program is executed, the method according to any one of claims 31 to 40 is implemented.

44. An electronic device, comprising the apparatus according to any one of claims 1 to 14 or 41, or the die according to any one of claims 15 to 30, or an apparatus configured to implement the method according to any one of claims 31 to 40.
